# EUROPEAN PATENT APPLICATION

(11) **EP 2 256 624 A1**
(43) Date of publication of application: **01.12.2010**
(21) Application number: 08722612.2
(22) Date of filing: 21.03.2008
(51) Int. Cl.: G06F 9/44

(54) **APPLICATION DEVELOPMENT SUPPORT DEVICE, PROGRAM AND RECORDING MEDIUM**

(71) Applicant: The Bank of Tokyo-Mitsubishi UFJ, Ltd., Chiyoda-ku Tokyo 100-8388 (JP)
(72) Inventor: HATTORI, Takahisa, Tokyo 103-0027 (JP); CHINUKI, Motonari, Tokyo 103-0027 (JP); TAKEUCHI, Tatsuki, Tokyo 111-0043 (JP)
(74) Representative: Viering, Jentschura & Partner
(86) International application number: PCT/JP2008/055248
(87) International publication number: WO 2009/116163

(57) **Abstract**

The development of an application program that includes a user interface (UI), which can provide a processing parameter to be handed to a web service when a UI screen is called via a link, is realized without coding operations. When the UI screen is called via the link, in which link information is embedded with the processing parameter, a platform program obtains the processing parameter and stores the processing parameter in a corresponding storage region (120). A call program that has been attached to an unconditional starting button, which is located in the UI screen by a developer, in advance activates the web service by using the processing parameter in the storage region as an argument (122). After the processing for storing the output variables of the web service in the corresponding storage region (124) is carried out, the processing, in which the called UI screen is generated and distributed, is carried out (126).

## Description

### TECHNICAL FIELD

The present invention relates to an application development support device, program and storage medium, and more particularly relates to an application development support device that supports the development of an application program using plural types of tools, an application development support program for causing a computer to function as the application development support device, and a storage medium storing the application development support program.

### BACKGROUND ART

Recently, Business Process Execution Language (BPEL), which is used as a standard (language) capable of describing business processes as workflows, has been growing in popularity. In relation to BPEL, tools have been prepared that are capable of visually describing desired workflows by performing operations to select and combine desired components from plural types of components corresponding to mutually different processes and that are capable of automatically generating programs conforming to BPEL from the workflows that are created, and an execution environment in which a program automatically generated by these tools is executed by a computer may be constructed. Therefore, by utilizing these tools, the development of a program that realizes a workflow providing desired web services by means of a computer may be performed easily and in a short time without coding operations that require knowledge relating to programming languages.

Java (registered trademark) Server Faces (JSF) is known as a standard for constructing user interfaces for web applications. In relation to JSF, tools have been prepared with which, by performing operations such as selecting and providing desired symbols from plural types of symbol that are usable as structural elements of a user interface screen and the like, design of a user interface screen, construction of a user interface with definitions of transitions of user interface screens and the like, and suchlike are possible. Thus, these tools are capable of automatically generating a program that realizes the constructed user interface. By utilizing such a tool, a program that realizes a desired user interface may be provided easily and in a short time without coding operations. Therefore, in the development of a web application, if programs of user interface parts of the web application are automatically generated using a JSF tool and programs of portions that provide web services are automatically generated using a BPEL tool, coding operations are not necessary at all. Thus, it is expected that a great reduction in development times may be realized.

However, no consideration has been given to programs automatically generated by using JSF (programs that realize user interfaces) being operated in conjunction with programs automatically generated by using BPEL (programs that realize workflows) (processing that calls up another program is not defined as a standard). For example, in order to construct a user interface that includes a specific user interface screen which is directly called by a link (for example, a hyperlink pasted into an arbitrary text, an Internet shortcut or the like) being selected and which displays a result of execution of a specific web service, a program that boots a specific program providing the specific web service must be separately created by a coding operation and added to the specific user interface screen. Therefore, even when programs of the user interface parts in a development target user application are automatically created by using a JSF tool and programs of the parts providing web services are automatically generated by using a BPEL tool, coding operations are necessary anyway. Consequently, a great reduction of development times has been difficult.

In the publication of Japanese Patent Application Laid-Open (JP-A) No. 2006-268121 concerning the above, a technology is proposed in which, at an application server having a first virtual machine that implements an interface with a client and a second virtual machine that executes various business objects, identifiers of data necessary for processing of the business objects are stored for each business object. The first virtual machine displays an arbitrary screen at the client and implements arbitrary data input and, when receiving a request that includes form data and calling up a business object corresponding to the received request, acquires identifiers of respective data required by the called up business object and, of respective data included in the form data, transfers to the second virtual machine only data whose identifiers match the acquired identifiers. Thus, coding for processing that extracts data required at the second virtual machine side is unnecessary.

### DISCLOSURE OF INVENTION

### PROBLEM TO BE SOLVED BY THE INVENTION

Now, individual web pages constituting a web site may be directly called up and displayed by selection of links, in which link information including address information of the arbitrary web pages is embedded. Information in the form of a query string or the like may be added to the link information embedded in a link, and the information added to the link information handed to the called up web page. Therefore, even with a web application that is constructed with programs of user interface parts being automatically generated by using a JSF tool and programs of parts that provide user services being automatically generated by using a BPEL tool, and the two being linked together, there is a need in that, if a processing parameter to be handed to a web service is added to link information and then a link in which the link information is embedded is selected, the processing parameter should be automatically handed to the web service at the same time as the specific user interface screen is called up and processing should be carried out by the web service in accordance with the handed over processing parameter.

In regard thereto, the technology recited in the publication of Japanese Patent Application Laid-Open (JP-A) No. 2006-268121 does not consider, when a user interface screen is called up by a link being selected, handing a processing parameter that has been added to link information to a web service at the same time, as described above. Therefore, even if the technology described in the publication of Japanese Patent Application Laid-Open (JP-A) No. 2006-268121 is applied, coding operations are necessary when constructing a user interface as described above. If even a small amount of coding operations are necessary in development of a program, there are problems in that a person responsible for the development has to be a person with knowledge about programming languages and, because debugging operations are required for programs that are created with coding operations, the development time is greatly lengthened compared to a case in which coding operations may be omitted.

The present invention has been made in consideration of the circumstances described above and an object is to provide an application development support device, application development support program and storage medium that are capable, without a coding operation, of realizing development of an application program having a user interface capable of applying a processing parameter handed to a web service when calling up a user interface screen via a link.

### MEANS FOR SOLVING THE PROBLEM

In order to achieve the object described above, an application development support device relating to the invention recited in claim 1 supports development of an application program including a first program and a second program, which is performed using a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and a second tool that, when a flowchart that defines processing that provides a desired web service is created by a developer, generates the second program for executing the processing that the created flowchart represents, the application development support device including: variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided; symbol generation component that, before the first operation is performed on the first tool, generates a starting symbol for causing processing to be performed that calls up the second program and provides the predetermined web service, as a symbol that is usable as a structural element of the user interface screen; program addition component that generates a third program that performs starting and variable exchange processing which, when, at a time of operation, the user interface screen in which the starting symbol generated by the symbol generation component is provided is called up or the starting symbol provided in the user interface screen is selected, causes the second program to be booted and, using data stored in a storage region in the variable storage region of a variable that corresponds to an input variable of the processing corresponding to the starting symbol as an argument, causes the corresponding processing to be executed, and adds the generated third program to the starting symbol; and storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.

In the invention recited in claim 1, the first tool displays the plural types of symbol that are usable as structural elements of a user interface at the display screen and, when a construction target user interface is defined, by a developer, by performing at least the first operation of designing a user interface screen by providing desired symbols among the plural types of symbols to desired positions in the screen, generates a first program for realizing the user interface. More specifically, for example, as is recited in claim 4, the first tool may be a tool that generates a first program when a construction target user interface is defined by a developer performing, in addition to the first operation: a second operation, of respectively relating individual information input/display spaces provided in the user interface screen, which has been designed by the first operation, with storage regions of corresponding variables among the plural variables for which storage regions have been provided in the variable storage region; and a third operation of defining transitions of the plural user interface screens that have been designed. Further, as recited in claim 7, a tool conforming to a first standard may be applied as the first tool; more specifically, for example, as recited in claim 8, JSF may be applied as the first standard.

Further in the invention recited in claim 1, when a flowchart defining processing that provides a desired web service is created by the developer, the second tool generates the second program for executing the processing represented by the created flowchart. A tool conforming to a second standard (a different standard from the first tool) may be applied as the second tool; more specifically, for example, as recited in claim 8, BPEL may be applied as the second standard.

Here, the application development support device relating to the invention recited in claim 1 is a device that supports the development of an application program including the first program and the second program, which is performed by using the first tool and second tool described above. Before the first operation is performed on the first tool, the variable storage region generation component generates the variable storage region in which the storage regions of the variables defined by the variable definition information are respectively provided, on the basis of the variable definition information that respectively defines the input variables and output variables of the processing that is executable by the second program generated by using the second tool. Before the first operation is performed on the first tool, the starting symbol for calling up the second program and causing the processing that provides the predetermined web service to be performed is generated as a symbol that is usable as a structural element of a user interface screen.

Further in the invention recited in claim 1, the program addition component generates the third program and adds the generated third program to the starting symbol. When, at a time of operation, a user interface screen in which the starting symbol generated by the symbol generation component is provided is called up or the starting symbol provided in a user interface screen is selected, the third program performs starting and variable exchange processing, which causes the second program to be booted and the corresponding processing to be executed, using data stored in the storage region, in the variable storage region, of a variable that corresponds to an input variable of the processing corresponding to the selected starting symbol as an argument.

Further, in the invention recited in claim 1, the storage component is provided that, when a specific user interface screen is directly called from a link-in which link information is embedded, including address information of the specific user interface screen and a processing parameter-by the link being selected at a time of operation, acquires the processing parameter embedded in the link and stores the acquired parameter in a corresponding storage region in the variable storage region. If the first program is executed on a computer that executes a platform program which functions as a platform for executing the first program, for example, as recited in claim 6, the storage component may be realized by the platform program.

Accordingly, when operations that define a construction target user interface are performed, by a developer performing the first operation by using the first tool, starting symbols generated by the symbol generation component are displayed at the display screen as symbols that are usable as structural elements of user interface screens, and the displayed starting symbols may be provided into a user interface screen that is being designed, by performing the first operation. Further, at a time of operation, when a specific user interface screen is directly called up from a link by the link being selected, in which link information including address information of the specific user interface screen and a processing parameter is embedded, the processing parameter embedded in the link is acquired by the storage component and the acquired processing parameter is stored in a corresponding storage region in the variable storage region.

If a specific user interface screen that is called up by a link being selected is a screen in which a starting symbol has been provided in the screen by a developer and a third program that has been added to the starting symbol is a configuration that performs starting and variable exchange processing when the user interface screen is called up, then when the specific user interface screen is called up by the link being selected, the starting and variable exchange processing that boots the second program and causes corresponding processing to be executed is performed, using data that is stored in the storage region, in the variable storage region, of a variable that corresponds to an input variable of the processing corresponding to the starting symbol as an argument. In association therewith, a processing parameter that has been acquired by the storage component and stored in a corresponding storage region in the variable storage region is also handed to the second program as an argument, and processing in accordance with the processing parameter is performed by the second program as the processing that corresponds to the starting symbol.

If a specific user interface screen that is called up by a link being selected is a screen in which a starting symbol has been provided in the screen by a developer and the third program that has been added to the starting symbol is a configuration that performs starting and variable exchange processing when the starting symbol provided in the user interface screen is selected, then-after the specific user interface screen is called up by the link being selected and the called up user interface screen is displayed-when the starting symbol in the specific user interface screen is selected, the starting and variable exchange processing that boots the second program and causes the corresponding processing to be executed is performed, using data that is stored in the storage region in the variable storage region of a variable that corresponds to an input variable of the processing corresponding to the starting symbol as an argument. Then, in association therewith, a processing parameter that has been acquired by the storage component and stored in a corresponding storage region in the variable storage region is also handed to the second program as an argument, and processing in accordance with the processing parameter is performed by the second program as the processing that corresponds to the starting symbol.

Thus, in the invention recited in claim 1, the third program that performs the starting and variable exchange processing is generated and added to the starting symbol by the program addition component before the first operation is performed on the first tool, and the storage component is provided that acquires a processing parameter embedded in a link and stores the processing parameter in a corresponding storage region of the variable storage region when, at a time of operation, a specific user interface screen is directly called up from the link. Thus, a developer may design a user interface screen that may be called from a link with a processing parameter to be handed to a web service attached and that may hand over the processing parameter and boot the second program (web service), simply by performing the first operation to provide the starting symbol displayed in the display screen to a desired position in the screen, and there is no need to perform a coding operation.

Therefore, according to the invention recited in claim 1, the development of an application program that has a user interface capable of applying a processing parameter handed to a web service when a user interface screen is called up via a link may be realized without a coding operation, and a time required for operations to define a construction target user interface, and hence a development time of the application program, may be shortened.

In the invention recited in claim 1, it is preferable if, for example, as recited in claim 2, the program addition component generates, as the third program, a program that performs the starting and variable exchange processing when the starting symbol provided in the user interface screen is selected and adds the program to the starting symbol, and, if conversion of the starting symbol for unconditional starting is instructed, changes the third program added to the starting symbol to a program that performs the starting and variable exchange processing unconditionally when the user interface screen in which the starting symbol is provided is called up.

Accordingly, when a user interface screen that is called up by a link being selected should be constructed such that a web service is booted when a starting symbol in the screen is selected, a developer need only perform the operation that provides the starting symbol to a desired position in the user interface screen, and when a user interface screen that is called up when a link is selected should be structured so as to boot a web service when the user interface screen is called up, the developer, after performing the above operation, need only perform an operation to instruct conversion of the starting symbol provided in the screen for unconditional starting. Therefore, the developer may select whether a starting timing of a web service is a time of selecting a starting symbol or is a time of calling up a user interface screen, and both may be realized by simple operations.

A starting symbol relating to the present invention may be a symbol that is visibly displayed in a provided user interface screen at a time of operation. However, it is preferable if, for example, as recited in claim 3, the symbol generation component performs a change setting of attribute information on the starting symbol for which conversion for unconditional starting has been instructed, such that the starting symbol is non-visibly displayed on the user interface screen in which the starting symbol is provided at a time of operation. Accordingly, a user interface screen in which the starting symbol relating to the present invention is provided may avoid becoming confused.

In the invention recited in claim 1, the first tool may be a tool that generates the first program for realizing the user interface when the construction target user interface is defined by a second operation and a third operation being performed by a developer in addition to the first operation, the second operation relating each individual information input/display space provided in the user interface screen designed by the first operation with a storage region of a corresponding variable among the plurality of variables for which the storage regions are provided in the variable storage region, and the third operation defining transitions of a plurality of user interface screens that are designed. In this case, for example, as recited in claim 4, a structure is possible such that the variable storage region generation component, on the basis of variable definition information that respectively define input variables and output variables of m types of processing that are executable by n types of the second program generated using the second tool (m≥n), generates, as the variable storage region, a variable storage region in which storage regions of the variables defined by the variable definition information are respectively provided and storage regions of variables that are duplicatively defined by the variable definition information are shared, the symbol generation component generates, as the starting symbol, each of in types of starting symbol for calling up any of the n types of second program and causing mutually different processing among the m types of processing to be performed, and, for each of the m types of starting symbol, the program addition component generates, as the third program, a program that performs starting and variable exchange processing which, when, at a time of operation, the user interface screen in which a specific starting symbol generated by the symbol generation component is provided is called up or the specific starting symbol provided in the user interface screen is selected, in addition to processing that causes, among the n types of second program, a specific second program for which the corresponding processing is executable to be booted and, using data stored in a storage region, among the storage regions in the variable storage region, of a variable that corresponds to an input variable of the processing corresponding to the specific starting symbol as an argument, causes the corresponding processing to be executed, stores an output variable handed from the specific second program when execution of the corresponding processing by the specific second program ends in a storage region, among the storage regions in the variable storage region, of a variable corresponding to the handed over output variable, and adds the generated third program to the specific starting symbol.

Accordingly, if a specific user interface screen that is called up by a link being selected is a screen in which a starting symbol has been provided in the screen by a developer, then when the specific user interface screen is called up or the starting symbol provided in the specific user interface screen is selected, the starting and variable exchange processing is performed, which causes a specific second program among the n types of second program that is capable of executing the corresponding processing to be executed, using data that is stored in, of the storage regions in the variable storage region, the storage region of a variable corresponding to an input variable of the processing corresponding to the starting symbol as an argument, and which, when the execution of the corresponding processing by the specific second program ends, stores an output variable handed from the specific second program into, of the storage regions in the variable storage region, the storage region of a variable corresponding to the handed over output variable. The above-described starting and variable exchange processing is also performed when a user interface screen in which a starting symbol is provided is called up by a transition from another user interface screen or the like and the starting symbol in this user interface screen is selected.

In the invention recited in claim 4, the variable storage region is generated by the variable storage region generation component, in which storage regions of the variables defined by the variable definition information are respectively provided and in which storage regions of variables that are duplicatively defined in the variable definition information are shared. Thus, even if, for example, a user interface is constructed in which an output variable of first processing executed by a second program is displayed in a specific information input/display space in a user interface screen, alteration setting is performed by a user as necessary on the data displayed in the specific information input/display space (the output variable of the first processing) and the user interface uses the data in the specific information input/display space, at which alteration setting has been performed as necessary, as an input variable of second processing by the second program, or suchlike, then the number of storage regions in the variable storage region that need to be related with the above-mentioned specific information input/display space need only be one. Accordingly, with the first tool, even if the number of storage regions in the variable storage region that can be related with individual information input/display spaces is limited to one each, a user interface as described above may be constructed, and a degree of freedom of design of the user interface to be realized by the first program may be improved.

In the invention recited in claim 1, as the first program created by the first tool, for example, as recited in claim 5, a program is excellent in which the first program is executed at a computer that executes a platform program that functions as a platform for executing the first program and, at a time of execution of the first program by this computer, synchronized processing is performed by the platform program that, when information is newly inputted in a specific information input/display space that is provided in the user interface screen displayed at a display screen and at which input of information is possible, stores the inputted information in a specific storage region, among the storage regions in the variable storage region, that is related with the specific information input/display space and, when the information is newly stored in the specific storage region in the variable storage region, causes the stored information to be displayed in a specific information input/display space that is provided in a user interface screen displayed at the display screen, that is related with the specific storage region and at which display of the information is possible.

An application development support program relating to the invention recited in claim 9 is an application development support program for causing a computer to function as an application development support device that supports development of an application program including a first program and a second program, which is performed using a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and a second tool that, when a flowchart that defines processing that provides a desired web service is created by a developer, generates the second program for executing the processing that the created flowchart represents, wherein the application development support program causes a first computer at which at least the first tool operates to function as: variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided; symbol generation component that, before the first operation is performed on the first tool, generates a starting symbol for causing processing to be performed that calls up the second program and provides the predetermined web service, as a symbol that is usable as a structural element of the user interface screen; and program addition component that generates a third program that performs starting and variable exchange processing which, when, at a time of operation, the user interface screen in which the starting symbol generated by the symbol generation component is provided is called up or the starting symbol provided in the user interface screen is selected, causes the second program to be booted and, using data stored in a storage region in the variable storage region of a variable that corresponds to an input variable of the processing corresponding to the starting symbol as an argument, causes the corresponding processing to be executed, and adds the generated third program to the starting symbol, and causes a second computer that executes at least the first program to function as: storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.

The application development support program relating to the invention recited in claim 9 is a program for causing the first computer, at which at least the first tool operates, to function as the above-described variable storage region generation component, symbol generation component and program addition component, and causing the second computer, which executes at least the first program, to function as the above-described storage component. By the above-described first computer and second computer executing the application development support program relating to the invention recited in claim 9, the above-described first computer and second computer function as the application development support device recited in claim 1. Similarly to the invention recited in claim 1, development of an application program that has a user interface capable of applying a processing parameter handed to a web service when a user interface screen is called up via a link may be realized without a coding operation.

A storage medium relating to the invention recited in claim 10 is a storage medium storing an application development support program for causing a computer to function as an application development support device that supports development of an application program including a first program and a second program, which is performed using a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and a second tool that, when a flowchart that defines processing that provides a desired web service is created by a developer, generates the second program for executing the processing that the created flowchart represents, wherein the application development support program causes a first computer at which at least the first tool operates to function as: variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided; symbol generation component that, before the first operation is performed on the first tool, generates a starting symbol for causing processing to be performed that calls up the second program and provides the predetermined web service, as a symbol that is usable as a structural element of the user interface screen; and program addition component that generates a third program that performs starting and variable exchange processing which, when, at a time of operation, the user interface screen in which the starting symbol generated by the symbol generation component is provided is called up or the starting symbol provided in the user interface screen is selected, causes the second program to be booted and, using data stored in a storage region in the variable storage region of a variable that corresponds to an input variable of the processing corresponding to the starting symbol as an argument, causes the corresponding processing to be executed, and adds the generated third program to the starting symbol, and causes a second computer that executes at least the first program to function as: storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.

The storage medium relating to the invention recited in claim 10 stores the application development support program relating to the invention recited in claim 9, that is, a program for causing the first computer, at which at least the first tool operates, to function as the above-described variable storage region generation component, symbol generation component and program addition component, and causing the second computer, which executes at least the first program, to function as the above-described storage component.
By the application development support program read from the storage medium relating to the invention recited in claim 10 being executed by the above-described first computer and second computer, the above-described first computer and second computer function as the application development support device recited in claim 1. Similarly to the invention recited in claim 1, development of an application program that has a user interface capable of applying a processing parameter handed to a web service when a user interface screen is called up via a link may be realized without a coding operation.

### EFFECT OF THE INVENTION

The present invention as described above is provided with: variable storage region generation component that generates a variable storage region respectively provided with storage regions of variables, on the basis of variable definition information that respectively defines input variables and output variables of processing that may be executed by a second program which is for executing processing represented by a flowchart that defines processing providing a desired web service; symbol generation component that generates a starting symbol for calling up the second program and causing the processing providing the predetermined web service to be performed, as a symbol that is usable as a structural element of a user interface screen; program addition component that generates a third program that, when, at a time of operation, a user interface screen in which a starting symbol is provided is called up or a starting symbol provided in a user interface screen is selected, performs starting and variable exchange processing, which causes the second program to be booted and corresponding processing to be executed using data that is stored in, of the variable storage region, a storage region of a variable corresponding to an input variable of the processing corresponding to the starting symbol as an argument, and adds the generated third program to the starting symbol; and storage component that, when, at a time of operation, a specific user interface screen is directly called up from a link by the link being selected, in which link information including address information of the specific user interface screen and a processing parameter is embedded, acquires the processing parameter embedded in the link and stores it in a corresponding storage region in the variable storage region. Thus, the present invention has an excellent effect in that development of an application program having a user interface capable of applying a processing parameter handed to a web service when calling up a user interface screen via a link may be realized without a coding operation.

### BRIEF DESCRIPTION OF THE DRAWINGS

Fig. 1 is a block diagram showing schematic structure of a first computer system that is used as a development environment of an application program of a present exemplary embodiment.
Fig. 2(A) is a conceptual diagram showing an example of a creation screen of a web service creation tool, and Fig. 2(B) is a conceptual diagram showing an example of a flow created on the creation screen by using the tool.
Fig. 3 is a flowchart showing details of conditional starting button generation processing.
Fig. 4 is a flowchart showing details of unconditional starting button generation processing.
Fig. 5 is a conceptual diagram showing an example of a creation screen of a UI construction tool.
Fig. 6A is a conceptual diagram describing generation of a variable storage region from variable definition information, and Fig. 6B is a conceptual diagram describing binding between information input/display spaces in screens and storage regions, and substitution of data (variables) at a time of operation.
Fig. 7 is a conceptual diagram showing a problem when the same processing as in Fig. 6B is performed by a conventional method.
Fig. 8 is a block diagram showing schematic structure of a second computer system that is used as an execution environment of the application program.
Fig. 9 is a conceptual diagram showing an example of a flow of processing when a web service (without input variables) is utilized from a link.
Fig. 10 is a conceptual diagram showing an example of a flow of processing when a web service (with an input variable) is utilized from a link.
Fig. 11 is a conceptual diagram showing another example of a flow of processing when a web service (with an input variable) is utilized from a link.

### BEST MODE FOR CARRYING OUT THE INVENTION

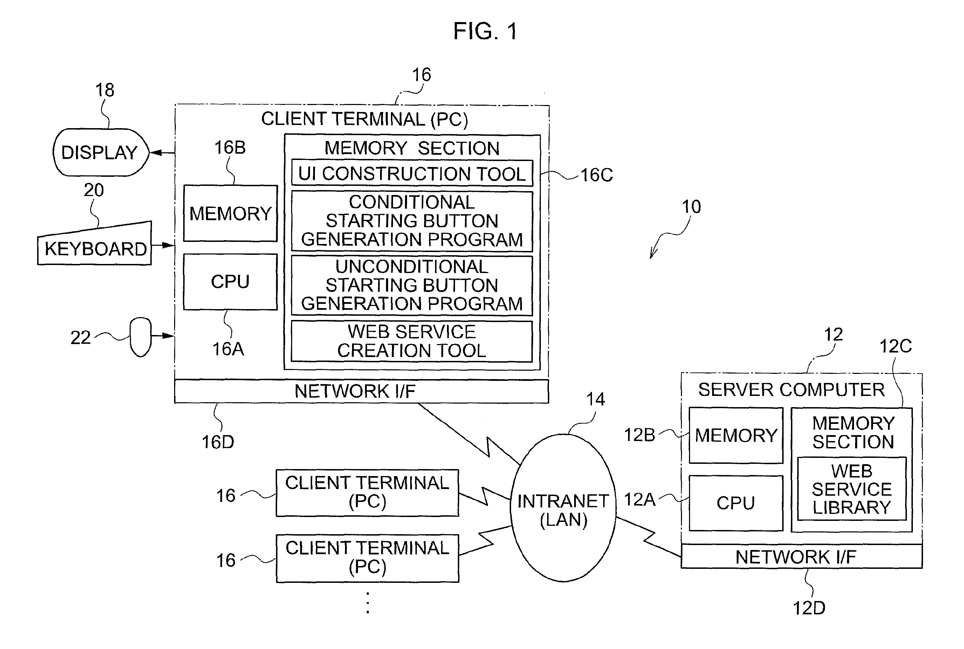

Herebelow, an example of an embodiment of the present invention is described in detail referring to the drawings. Fig. 1 shows a first computer system 10 relating to the present exemplary embodiment. The first computer system 10 relating to the present exemplary embodiment is a computer system that is used when developing an application program for providing a predetermined service (a web service) to users accessing a predetermined website, and is structured by a server computer 12 being respectively connected with a large number of client terminals 16 via an intranet 14. An individual client terminal 16 is a terminal device operated by a developer who develops the above-mentioned application, is formed of, for example, a personal computer (PC) or the like, and is provided with a CPU 16A, a memory 16B formed of RAM or the like, a memory section 16C formed of an HDD (hard disk drive) or the like, and a network interface (I/F) section 16D. A display 18 to be used as display component and a keyboard 20 and mouse 22 to be used as input component are respectively connected to the individual client terminal 16, and the client terminal 16 is connected to the intranet 14 via the network I/F section 16D.

The above-mentioned application program is broadly divided into a screen control program for realizing user interface (UI) parts of the predetermined website (the first program of the present invention) and a web service providing program for providing the predetermined web service to users (the second program of the present invention). A UI construction tool program for developing the above-mentioned screen control program and a web service creation tool program for developing the above-mentioned web service providing program are respectively installed at the memory section 16C of the client terminal 16. Furthermore, a conditional starting button generation program for performing later-described conditional starting button generation processing and an unconditional starting button generation program for performing unconditional starting button generation processing are also installed at the client terminal 16.

Herein, The client terminal 16 corresponds to the first computer recited in claims 9 and 10. Of the application development support program recited in claims 9 and 10, the conditional starting button generation program and the unconditional starting button generation program correspond to the program that causes the first computer to function as the variable storage region generation component, the symbol generation component and the program addition component. By the CPU 16A executing the above-mentioned conditional starting button generation program and unconditional starting button generation program, the client terminal 16, together with a later-described application server 34 of a website management system 32, functions as the application development support device relating to the present invention.

Herein, the UI construction tool corresponds to the first tool relating to the present invention, and the web service creation tool corresponds to the second tool relating to the present invention. As the UI construction tool, a tool conforming to the JSF (Java (registered trademark) Server Faces) standard is excellent, but a tool conforming to another standard is also possible. As the web service creation tool, a tool conforming to the BPEL (Business Process Execution Language) is excellent, but a tool conforming to another standard is also possible.

Meanwhile, the server computer 12 is provided with a CPU 12A, a memory 12B formed of RAM or the like, a memory section 12C formed of an HDD or the like, and a network I/F section 12D, and is connected to the intranet 14 via the network I/F section 12D. In development of web service providing programs using the above-mentioned web service creation tool, programs are developed using individual web services (for example, a later-described "book search", "book purchase" and the like) as units, and the developed web service providing programs may also be utilized for provision of the same web services at other websites. Therefore, a web service library for registering the developed web service providing programs is memorized in the memory section 12C of the server computer 12, and the web service providing programs registered in this web service library may be respectively used by plural developers operating different client terminals 16 from one another.

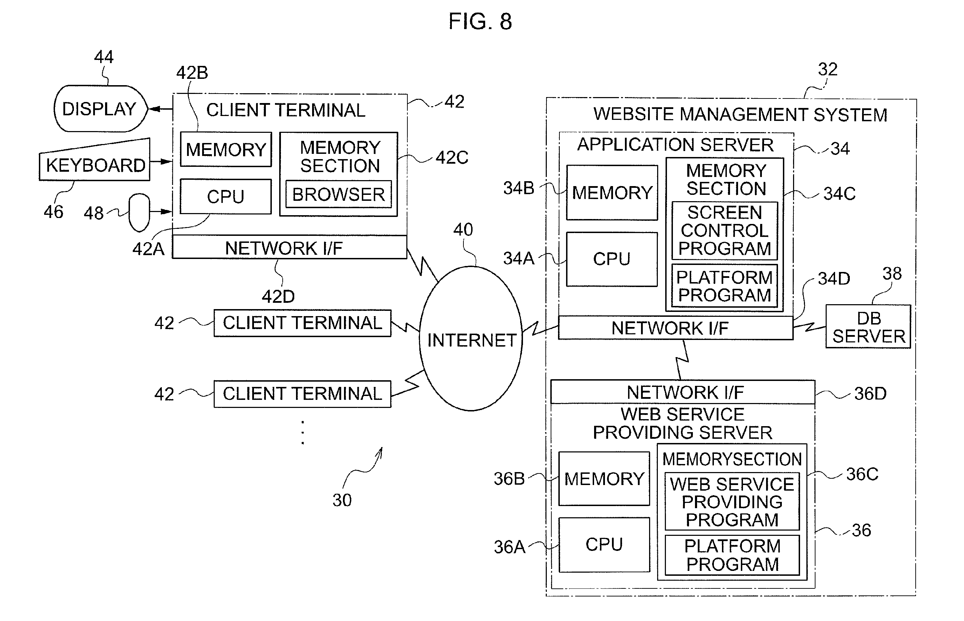

Next, structure of a second computer system 30 that is used as an execution environment of the application program developed by means of the first computer system 10 will be described referring to Fig. 8. The second computer system 30 is provided with the website management system 32 for managing a specific site. The website management system 32 is provided with the application server 34, a web service providing server 36 and a DB (database) server 38, and is structured by the web service providing server 36 and the DB server 38 being respectively connected to the application server 34 via communications circuits.

The application server 34 is provided with a CPU 34A, a memory 34B formed of RAM or the like, a memory section 34C formed of an HDD or the like, and a network I/F section 34D. The aforementioned screen control program of the application program developed by utilizing the first computer system 10 described earlier and a platform program that functions as a platform for executing this screen control program are respectively installed in the memory section 34C. If, for example, the UI construction tool conforms to the JSF standard, a program that provides a platform referred to as a JSF engine is used as the platform program, and the screen control program generated by means of the UI construction tool is executed on this platform (the JSF engine).

Herein, the application server 34 corresponds to the second computer recited in claims 9 and 10. Of the application development support program recited in claims 9 and 10, the platform program installed at the memory section 34C of the application server 34 corresponds to the program that causes the second computer to function as the storage component. By the CPU 34A executing the above-mentioned platform program, the application server 34, together with the client terminal 16 described earlier, functions as the application development support device relating to the present invention.

The network I/F section 34D of the application server 34 is connected to a computer network (the Internet) 40 that is formed by a large number of web servers being connected to one another via communications circuits. A large number of client terminals 42 are connected to the Internet 40. A client terminal 42 is provided with a CPU 42A, a memory 42B formed of RAM or the like, a memory section 42C formed of an HDD or the like, and a network I/F section 42D. A browser (web viewing software) program is installed at the memory section 34C, and a display 44 to be used as display component and a keyboard 46 and mouse 48 to be used as input component are respectively connected to the client terminal 42.

The web service providing server 36 is provided with a CPU 36A, a memory 36B formed of RAM or the like, a memory section 36C formed of an HDD or the like, and a network I/F section 36D. The aforementioned web service providing program of the application program developed by utilizing the first computer system 10 described earlier and a platform program that functions as a platform for executing this web service providing program are respectively installed in the HDD 36C. If, for example, the web service creation tool conforms to the BPEL standard, a program that provides a platform referred to as a BPEL engine is used as the platform program, and the web service providing program generated by the web service creation tool is executed on this platform (the BPEL engine).

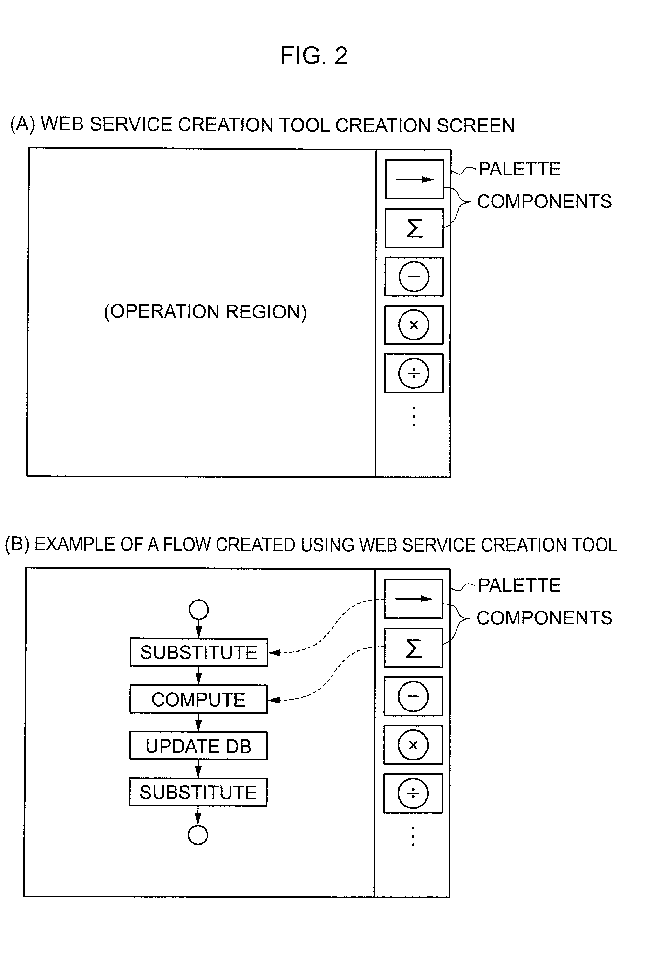

Next, as an operation of the present exemplary embodiment, firstly, development of a web service providing program that is performed by using the web service creation tool will be described. In order to develop the web service providing program, when a developer boots the web service creation tool program on the client terminal 16, a creation screen, for example, as shown in Fig. 2(A), is displayed at the display 18 of the client terminal 16. The web service creation tool is a tool that is provided with a function that, when a flowchart that defines processing that realizes a provision target web service is created by a developer, generates a web service providing program for executing the processing represented by the created flowchart. In the creation screen shown in Fig. 2(A), an operation region for the developer to create a flowchart and a palette are provided. The palette displays plural types of components (symbols) representing mutually different processes that may be utilized in creation of the flowchart.

When the above-described creation screen is displayed, the developer, via the mouse 22 and/or the keyboard 20, repeats operations that select desired components from among the plural components displayed in the palette and provide them to the operation region, input information that defines details of processing represented by the provided components as necessary, and define connection relationships between the provided components and components previously provided to the operation region (sequences of execution of the processing represented by the components). Thus, for example, as shown in Fig. 2(B), a flowchart that defines processing that realizes the provision target web service is created. When the creation of the flowchart finishes, the developer performs an operation to instruct the generation of a program corresponding to the created flowchart. Programs for realizing processes represented by the individual components have been added to the individual components displayed in the palette. When generation of the program is instructed, the web service creation tool modifies the programs added to the individual components that structure the created flowchart, on the basis of the information defining processing details that has been inputted by the developer, and performs processing of ordering and the like in accordance with the connection relationships of the individual components in the created flowchart. Thus, the web service creation tool generates the program for executing the processing represented by the created flowchart (the web service providing program). Accordingly, a developer may provide a web service providing program that provides a desired web service, without coding operations.

Further, the web service creation tool generates variable definition information that describes names and the like of input variables and output variables for when the generated web service providing program is executed. More specifically, this variable definition information is generated using web services that are realized by web service providing programs as units. When, for example, a flowchart that realizes plural types of web service is created and web service providing programs that realize the plural types of web service are generated on the basis of this flowchart, for reasons of shared parts that are common to processing for realizing the individual web services being numerous or the like, plural variable definition information corresponding to web services that are different from one another among the plural types of web service are respectively generated by the web service creation tool.

When a web service providing program that realizes plural types of web service is generated, a number of types n of the web service providing programs is less than a number of types m of the web services that are capable of being provided (n<m). However, when the individual web service providing programs are programs that each realize a single web service, the number of types n of the web service providing programs is the same as the number of types m of the web services that are capable of being provided (n=m). Herein, the above-described variable definition information is referred to in, for example, the BPEL standard as WSDL (Web Service Description Language). In the present exemplary embodiment, there is a development rule that consistent names should be used for individual variables. In web services using the same variable, regardless of the details of these web services, the variables that are defined in the corresponding variable definition information are given the same name.

When the generation of the web service providing program(s) and variable definition information(s) by the web service creation tool as described above finishes, the developer uploads the generated web service providing programs and variable definition information from the client terminal 16 to the server computer 12. The web service providing programs and variable definition information uploaded to the server computer 12 are registered in the web service library, and may be used by other developers.

Next, a preparation operation that a developer performs prior to performing development of the screen control program by using the UI construction tool is described. When developing a screen control program by using the UI construction tool, the developer lists all the web services that are planned to be provided to users through the UI that is to be realized by means of the screen control program to be developed thereafter, and acquires (memorizes in the memory 16A or the memory section 16A) the web service providing programs and variable definition information corresponding to the listed individual web services by, for example, downloading them from the web service library of the server computer 12 or, as necessary, booting the web service creation tool and generating the web service providing programs and variable definition information by means of the web service creation tool after performing the aforementioned flowchart creation operation, or the like. Then, for all the web services whose provision to users is planned, when the corresponding web service providing programs and variable definition information are acquired, the conditional starting button generation program is booted on the client terminal 16.

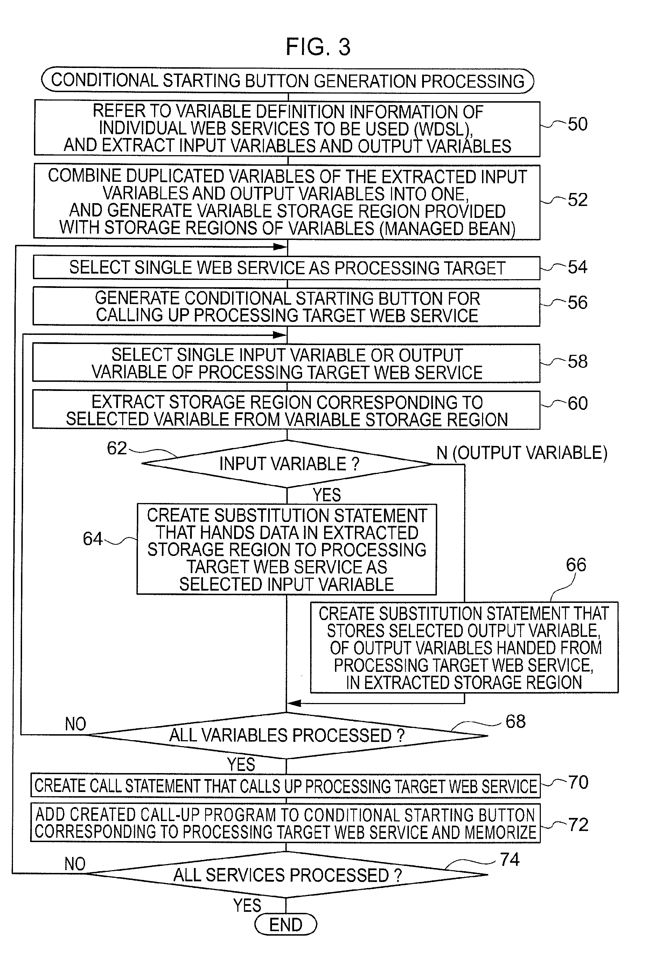

Herebelow, the conditional starting button generation processing that is performed by the client terminal 16, by the booted conditional starting button generation program being executed by the CPU 16A, is described referring to Fig. 3. In the conditional starting button generation processing, firstly, in step 50, the variable definition information (for example, WSDL with the BPEL standard) corresponding to the individual web services whose provision to users is planned, which have been memorized in the memory 16A or the memory section 16A, are each referred to and the input variables and output variables described by the individual variable definition information are all extracted. For example, if the number of types of web service whose provision to users is planned is m, input variables and output variables are extracted from m variable definition information. Then, in step 52, of the input variables and output variables extracted in step 50, duplicated variables (the names are the same and thus they are the same variable) are combined into one, and a variable storage region is generated in which storage regions of the variables are provided (for example, a managed bean with the JSF standard).

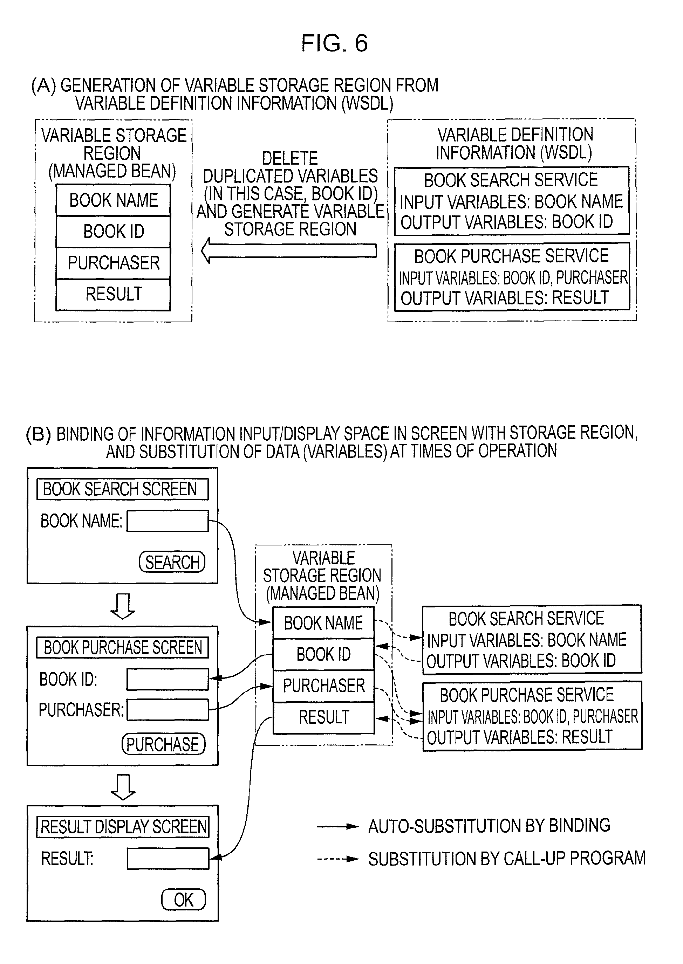

For example, as shown in Fig. 6A, if the web services whose provision to users is planned are a Book Search Service and a Book Purchase Service, an input variable of the book search service is Book Name and an output variable is Book ID, and input variables of the Book Purchase Service are Book ID and Purchaser and an output variable is Result, the duplicated book ID is combined into one, and a variable storage region is generated in which storage regions are provided one each for the variables Book Name, Book ID, Purchaser and Result. Herein, steps 50 and 52 correspond to the variable storage region generation component relating to the present invention (more specifically, the variable storage region generation component recited in claim 4).

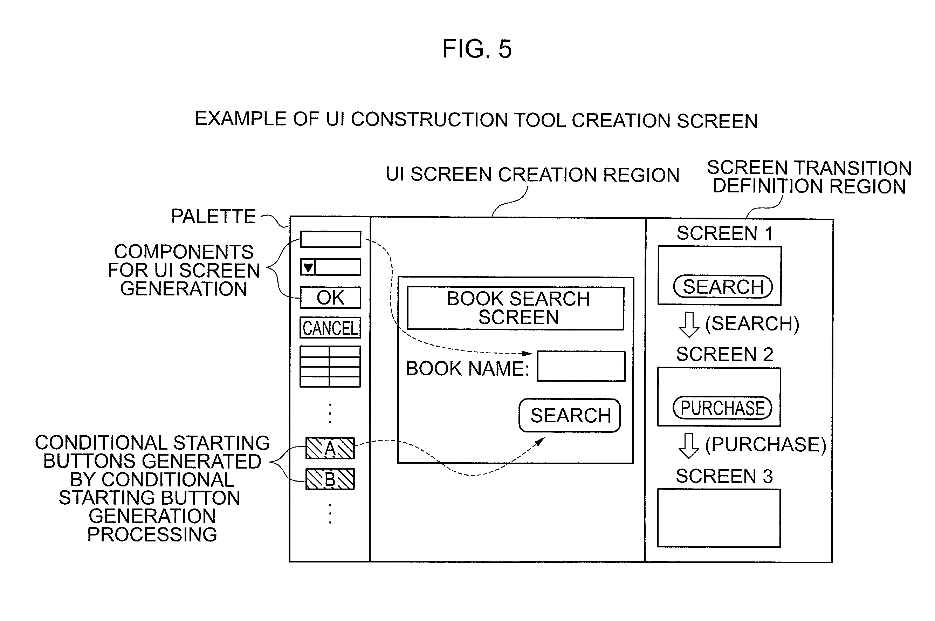

In step 54, a single web service is selected as a processing target from among the web services whose provision to users is planned. Then, in step 56, (information of) a conditional starting button that will be visibly displayed in a UI screen at a time of operation and may, by selection, call up the processing target web service on a web page is generated. As will be described in detail later, in the UI construction tool, symbols of information input/display spaces, various buttons and the like that are usable as structural elements in the UI screen are displayed in the palette of the creation screen (see Fig. 5), and the UI screen is designed by a developer, by the operation of selecting a desired symbol and providing it to a desired position being repeated. In step 56, (information of) the conditional starting button conforming to the same standard as the UI construction tool (for example, JSF) is generated as the conditional starting button that is visibly displayed in the UI screen at a time of operation and that may, by selection, call up the processing target web service on the web page. Accordingly, the generated conditional starting button may be displayed in the palette of the creation screen of the UI construction tool. Herein, step 56 corresponds to the symbol generation component relating to the present invention.

Next, processing from step 58 onward corresponds to the program addition component relating to the present invention (more specifically, of the program addition component recited in claim 4, the program addition component that generates a program that performs starting and variable exchange processing when the starting symbol provided in the user interface screen is selected and adds the program to the starting symbol). Firstly, in step 58, a single variable is selected from among the input variables and output variables described in the variable definition information corresponding to the processing target web service. Then, in step 60, the variable storage region generated in step 52 is searched, using the name of the variable selected in step 58 as a key, and the storage region corresponding to the variable selected in step 58 is extracted from the variable storage region. In step 62, it is determined whether or not the variable selected in step 58 is an input variable. If the determination is positive, control passes to step 64, and a substitution statement (program) is created that hands data stored in the storage region extracted from the variable storage region in step 60 to the processing target web service as the variable selected in step 58 (an input variable). If the variable selected in step 58 is an output variable, the determination of step 62 is negative, control passes to step 66, and a substitution statement (program) is created that, of output variables handed from the processing target web service at a time of ending of processing by the processing target web service, stores the output variable selected in step 58 in the storage region extracted from the variable storage region in step 60.

Then, in step 68, it determined whether or not the above-described processing has been performed on all the variables described in the variable definition information corresponding to the processing target web service. If the determination is negative, control returns to step 58, and step 58 to step 68 are repeated until the determination of step 68 is positive. Accordingly, a program is automatically generated that, at a time of starting of (the program that provides) the processing target web service, performs processing that hands data corresponding to the input variables of the processing target web service from the variable storage region to the processing target web service as input variables (for example, see the rightward arrows shown by broken lines in Fig. 6B) and, at a time of ending of (the program that provides) the processing target web service, performs processing that stores output variables handed from the processing target web service in the variable storage region (for example, see the leftward arrows shown by broken lines in Fig. 6B).

If the determination of step 68 is positive, control passes to step 70, and a call statement (program) that calls up the processing target web service is created. Then, in step 72, the call-up program created in the above-described processing (a program including the substitution statements created in steps 64 and 66 and the call statement created in step 70, corresponding to the third program relating to the present invention (more specifically, the program recited in claim 2 that performs starting and variable exchange processing when the starting symbol provided in the user interface screen is selected)) is added to (information of) the button corresponding to the processing target web service, which was earlier created in step 56, and memorizes the same in a predetermined memory region of the memory 16B or the memory section 16C. Then, in step 74, it is determined whether or not the above-described processing has been performed for all the web services whose provision to users is planned. If the determination is negative, control returns to step 54, and step 54 to step 74 are repeated until the determination of step 74 is positive. Accordingly, (information of) buttons to which the above-mentioned call-up programs are added are respectively generated for all of the web services whose provision to users is planned. Then, when the determination of step 74 is positive, the conditional starting button generation processing ends.

Then a developer boots the UI construction tool program at the client terminal 16. Accordingly, a creation screen, for example, as shown in Fig. 5, is displayed at the display 18 of the client terminal 16. The UI construction tool is a tool provided with functions that allow the developer to perform operations for constructing a UI and, when operations by the developer are finished, generate a screen control program that realizes the constructed UI. The creation screen shown in Fig. 5 is respectively provided with a UI screen creation region for the developer to create a UI screen (web page), a palette showing symbols of information input/display spaces, various buttons and the like that are usable as structural elements of UI screens, and a screen transition definition region for defining transitions between plural UI screens created in the UI screen creation region. In the present exemplary embodiment, the above-described conditional starting button generation processing is executed prior to starting of the UI construction tool. Thus, at the time of starting of the UI construction tool, information of a conditional starting button generated by the conditional starting button generation processing and memorized in a predetermined memory region is read and, for example, as shown in Fig. 5, the conditional starting button generated by the conditional starting button generation processing (a button for calling up an individual web service whose provision to users is planned) is displayed in the palette as one of the symbols that are usable in creation of the UI screen.

When the preparation operation as described above ends, the developer then performs an operation for defining the construction target UI. Thus, construction of a UI of a predetermined website that provides a web service (development of a screen control program) is performed. That is, the developer repeats an operation (the first operation) of, via the mouse 22 and/or the keyboard 20, selecting a desired symbol from among the plural symbols displayed in the palette and providing it to a desired position in the UI screen creation region and, as necessary, inputting text information to be displayed in the UI screen. Thus, plural UI screens (web pages) that structure a predetermined website are sequentially created (designed). Herein, in the creation of an individual UI screen, when the UI screen to be created is a screen that motivates the provision of a specific web service to a user, the developer performs an operation of selecting the conditional starting button for calling up the specific web service from among the symbols displayed in the palette and providing this button into the UI screen.

Now, if a specific UI screen that has screen content displaying a processing result of a specific web service and that is capable, by a link in which link information is embedded being selected, of being directly called up from the link (hereinafter this screen is referred to as a link call-up UI screen) is to be included in the construction target UI, then the developer, at the time of creation of the link call-up UI screen, performs an operation to instruct that a conditional starting button temporarily provided in the UI screen under construction be converted for unconditional starting (changed to an unconditional starting button).

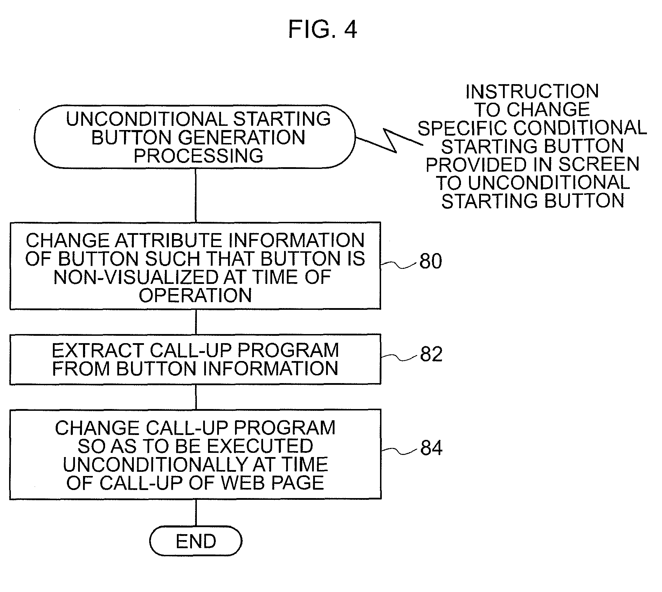

This operation is constituted by, for example: selecting the specific conditional starting button, which corresponds to the specific web service whose processing result is displayed in the link call-up UI screen, from the plural conditional starting buttons previously generated by the conditional starting button generation processing and displayed in the palette of the creation screen; performing an operation to temporarily provide the selected specific conditional starting button at a desired position in the UI screen being created; thereafter performing an operation that causes properties (attribute information) of the specific conditional starting button provided in the UI screen being created to be displayed; and then performing an operation that turns on a function, in the displayed attribute information of the specific conditional starting button, that causes the call-up program that is called up by the UI screen to be executed unconditionally (in the present exemplary embodiment, this function is referred to as the SubmitOnLoad function). Accordingly, the unconditional starting button generation program is booted on the client terminal 16, and the booted conditional starting button generation program is executed by the CPU 16A. Thus, the unconditional starting button generation processing shown in Fig. 4 is executed.

In this unconditional starting button generation processing, firstly, in step 80, information of the specific conditional starting button provided in the link call-up UI screen (the conditional starting button for which turning on the SubmitOnLoad function has been instructed) is read from the memory 16B or the memory section 16C. Of the button information that is read, attribute information of the button (specifically, information defining display colors of the button) is changed (to transparent) such that the button that has been converted for unconditional starting is non-visualized in the link call-up UI screen. Herein, this step 80 corresponds to the symbol generation processing recited in claim 3.

In step 82, a call-up program generated previously by the conditional starting button generation processing is extracted from the button information that has been read. The call-up program extracted in step 82 is a program that is executed and performs processing that calls up a corresponding web service or the like when, at a time of operation (a time of execution of the developed application program), the UI screen in which the corresponding conditional starting button is provided is called up from the client terminal 42 and displayed at the display 44 of the client terminal 42 and then the conditional starting button that is visibly displayed in the displayed UI screen is selected. Next, in step 84, the call-up program extracted in step 82 is changed such that the call-up program will be executed unconditionally (without going through a button selection operation) when the UI screen in which the unconditional starting button is provided (the link call-up UI screen) is called up by a link being selected or the like, and the unconditional starting button generation processing ends.

Herein, the processing of step 84 may be performed by, for example, deleting from the call-up program a determination statement (program) that determines whether or not a button selection operation has been performed, or the like. Further, the above-described steps 82 and 84 correspond to the program addition component relating to the present invention. More specifically, it corresponds to the program addition component that performs the processing recited in claim 2 of "if conversion of the starting symbol for unconditional starting is instructed, changes the third program ... to a program that performs the starting and variable exchange processing unconditionally when the user interface screen in which the starting symbol is provided is called up".

When the above-described unconditional starting button generation processing ends, the conditional starting button displayed in the UI screen under construction is converted for unconditional starting (is changed to an unconditional starting button). In association with the previous change of the attribute information in step 80, the display in the UI screen under construction is changed from a visible display to a non-visible display (is made transparent). Further, in association with the change of the conditional starting button provided in the UI screen under construction to the unconditional starting button, the UI screen under construction is changed to a UI screen that calls up the specific web service by the call-up program that has been added to the unconditional starting button in the screen being unconditionally executed at the application server 34 when the UI screen is directly called up from a link and that, when processing corresponding to the specific web service ends, displays a processing result of the specific web service, that is, to a link call-up UI screen.

Thus, the developer may generate the unconditional starting button (change the UI screen under construction to a link call-up UI screen) without a coding operation, by simple operations of the form of providing the conditional starting button in the UI screen under construction and instructing that properties of the provided conditional starting button be displayed and the SubmitOnLoad function be turned on. Herein, the call-up program that has been through the above-described unconditional starting button generation processing corresponds to the third program relating to the present invention.

Further, if the created UI screen is a screen in which an information input/display space for input of information by a user or display of information is provided, the developer performs an operation (the second operation) that relates the individual information input/display space in the screen with, of the variable storage region previously generated by means of the button generation processing, a storage region corresponding to information that is inputted via the information input/display space or displayed at the information input/display space (also referred to as UI binding). Further, when all the UI screens (web pages) structuring a website have been created, the developer performs an operation (the third operation) that defines transitions of the created UI screens in the screen transition definition region.

If a concrete example of operation by a developer is described-in a case in which, as shown in Fig. 6B, programs of a book search service and a book purchase service have already been developed to be used as programs of web services whose provision to users through a development target website is planned and, as a UI of this website, a UI is constructed that sequentially transitions to: a book search screen for a user to input a search target book name and instruct a search; a book purchase screen for the user to check a book ID extracted by the above-mentioned search, change the book ID as necessary, and then input purchaser information and instruct a purchase; and a result display screen for the user to check a result of purchase processing-the developer, for the book search screen, creates the book search screen by performing operations to respectively provide in the screen an information input/display space for inputting the book name and a conditional starting button for calling up the book search service, and performs an operation to relate the information input/display space in the book search screen with a book name storage region in the variable storage region.

Further, the developer, for the book purchase screen, creates the book purchase screen by performing operations to respectively provide in the screen an information input/display space for performing display and input of a book ID, an information input/display space for inputting information of a purchaser, and a conditional starting button for calling up the book purchase service, and performs operations to relate the information input/display space for performing display and input of a book ID in the book purchase screen with a book ID storage region in the variable storage region, and also relate the information input/display space for inputting purchaser information with a purchaser information storage region in the variable storage region. The developer further creates the result display screen by performing operations to respectively provide in the screen an information input/display space for displaying result information and a button for instructing deletion of the screen (the button marked "OK" shown in Fig. 6B), and performs an operation to relate the information input/display space in the result display screen with a result information storage region in the variable storage region.

The developer may further perform operations that define transitions of the screens, so as to, from the state in which the book search screen is displayed, transition from the book search screen to the book purchase screen when the conditional starting button in this screen is selected, and from the state in which the book purchase screen is displayed, transition from the book purchase screen to the result display screen when the conditional starting button in this screen is selected. By the above-described operations, the UI shown in Fig. 6B may be defined.

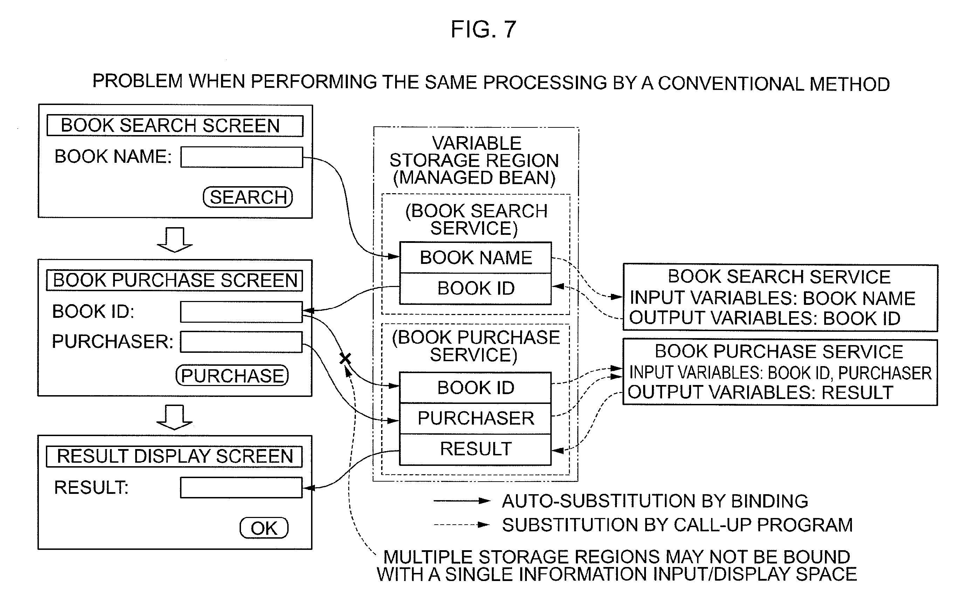

Now, if the UI described above were to be constructed in a conventional system provided with a variable storage region in which the individual web services whose provision to users is planned are units, then, for example, as shown in Fig. 7, the information input/display space for performing display and input of a book ID that is provided in the book purchase screen must be related respectively with a book ID storage region in a variable storage region that corresponds to the book search service and a book ID storage region in a variable storage region that corresponds to the book purchase service. However, with a standard such as JSF or the like to which the UI construction tool conforms, the numbers of storage regions in the variable storage region that may be related with the individual information input/display spaces are limited to one each, and the information input/display space in the book purchase screen for display and input of the book ID may not be related with plural storage regions as described above. Thus, the UI as shown in Fig. 6B may not be constructed. In contrast, in the present exemplary embodiment, in the conditional starting button generation processing described previously, the variable storage region is generated with the storage region of a variable that is duplicatively defined in the variable definition information being shared. Thus, the UI shown in Fig. 6B may be constructed, in which, as shown in Fig. 6B, the information input/display space in the book purchase screen for display and input of the book ID is only related with a single storage region, and a degree of freedom of design of UIs that may be realized may be improved.

Construction of a UI that includes ordinary UI screens in which conditional starting buttons are provided is described above. For a link call-up UI screen, an information input/display space for displaying a processing result of a web service is provided, and at least an operation of relating the provided information input/display space with a storage region at which the processing result of the web service is stored (the second operation) is performed. In addition to an unconditional starting button in the link call-up UI screen, a conditional starting button may be provided by performing the first operation, and an operation that defines a transition from the link call-up UI screen, when transitioning to another UI screen motivated by the conditional starting button located in the link call-up UI screen being selected, in the screen transition definition region (the third operation) is performed.

When operations to define the UI are finished, the developer instructs the UI construction tool to generate a program that realizes the UI. Accordingly, the UI construction tool generates a screen control program that realizes the UI constructed by the developer (causes the UI screens to be displayed in sequence at the display 44 of the client terminal 42 in response to requests from the client terminal 42 (see Fig. 8)). This screen control program is structured to include data that defines the individual UI screens and programs that define processing when various operations are performed via the individual UI screens by users. For UI screens that are provided with conditional starting buttons for calling up the various web services, the call-up programs that have been generated by the previously described conditional starting button generation processing and added to the conditional starting buttons are read, and the call-up programs that are read are used as programs that define processing when the conditional starting buttons are selected by users (are incorporated into the screen control program). For link call-up UI screens in which unconditional starting buttons are provided, the call-up programs that have been changed by the previously described unconditional starting button generation processing and added to the unconditional starting buttons are used as programs that define processing that is performed unconditionally when the link call-up UI screens are called up from links (are incorporated into the screen control program).

By the operations and processing described above, development of an application program including a screen control program and a web service providing program is completed. Thus, in the present exemplary embodiment, a web service providing program may be developed without a coding operation by utilizing the web service creation tool. For the screen control program, conditional starting button generation processing is performed beforehand, the variable storage region is generated with storage regions of variables that are duplicatively defined-in the variable definition information of the individual web services whose provision to users is planned-being shared, and conditional starting buttons are generated to which are added call-up programs that call up the individual web services whose provision to users is planned. Thus, a developer may construct a desired UI (develop the screen control program) without performing a coding operation, by utilizing the UI construction tool and performing various operations including the operation of providing the conditional starting buttons displayed in the palette of the creation screen of the UI construction tool into the screens.

Even if a link call-up UI screen is included in the construction target UI, a developer may realize construction of the UI including the link call-up UI screen without performing a coding operation, by selecting a specific conditional starting button corresponding to a specific web service whose processing result is displayed in the link call-up UI screen, providing the selected conditional starting button into the UI screen that is under construction, changing the conditional starting button provided in the UI screen under construction to an unconditional starting button upon performing an operation on the conditional starting button provided in the UI screen under construction that turns on the SubmitOnLoad function, and making the UI screen under construction a link call-up UI screen. Therefore, the application program including the screen control program and the web service providing program may be developed in a very short time.

Next, operations at a time of execution of the application program (a time of operation of the website) are described. At the time of execution of the application program, as shown in Fig. 8, of the developed application program, the screen control program is installed at the memory section 34C of the application server 34 and the web service providing program is installed at the memory section 36C of the web service providing server 36.

Each time distribution of a UI screen is requested by a user via the client terminal 42, the screen control program that is executed at the application server 34 (specifically, on the platform provided by the platform program) sends data of the UI screen whose distribution has been requested to the request source client terminal 42. Thus, the UI screen whose distribution has been requested is displayed at the display 44 of the request source client terminal 42. Information that is inputted in an information input/display space in a UI screen displayed at the display 44, by the user operating the keyboard 46 or the like, is temporarily memorized at the memory 42B of the client terminal 42 or the like, and is then transferred to the application server 34 at a predetermined timing (for example, a timing when a conditional starting button that is a trigger for transition to the next UI screen is selected, or the like).

When the application server 34 receives the information inputted in the information input/display space in the UI screen by the user from the client terminal 42, the platform program that is operating at the application server 34 stores the received information in, of the variable storage region provided in the memory 34B of the application server 34, a storage region that has been related in advance with the information input/display space at which the information was inputted (processing that corresponds to a rightward arrow of the solid line arrows marked "auto-substitution by binding" in Fig. 6B, corresponding to the synchronized processing recited in claim 5).

When a conditional starting button for calling up an arbitrary web service in a UI screen is selected by a user, the program of the corresponding web service is booted up on the web service providing server 36 that provides the web service (specifically, on the platform provided by the platform program) by the call-up program that has been added to the selected conditional starting button, and data in the storage region in the variable storage region of a variable that corresponds to an input variable of the booted program (a pre-specified storage region) is read from the variable storage region and the data that is read is handed to the booted program as an input variable (processing corresponding to a rightward arrow of the broken line arrows marked "substitution by call-up program" in Fig. 6B). Accordingly, processing for realizing the web service corresponding to the conditional starting button selected by the user is executed at the web service providing server 36. Here, if the processing for realizing the web service includes access to a database, access to the database is realized by access to the database being instructed from the web service providing server 36 to the DB server 38 via the application server 34.

When the processing by the program booted up on the web service providing server 36 ends, data corresponding to an output variable is handed from the web service providing server 36 to the application server 34, and processing that stores the handed over data in the storage region in the variable storage region that corresponds to the output variable (a pre-specified storage region) is performed at the application server 34 by the call-up program (processing that corresponds to a leftward arrow of the broken line arrows marked "substitution by call-up program" in Fig. 6B). Further, if the storage region in which the data has been newly stored by the above processing is related with some information input/display space in the UI screen, processing is performed by the platform program operating on the application server 34 that causes the data newly stored in the above-mentioned storage region to be displayed in the related information input/display space in the UI screen (processing that corresponds to a leftward arrow of the solid line arrows marked "auto-substitution by binding" in Fig. 6B, corresponding to the synchronized processing recited in claim 6). Accordingly, various web services are provided to users through the website.

When, for example, a website formed with the UI screens shown in Fig. 6B is accessed by a user, firstly, the book search screen is displayed at the display 44 of the client terminal 42 that the user is operating. After the user inputs a search target book name in the book name input/display space in the book search screen, when the user selects the conditional starting button marked "Search" (a button for calling up the book search service), the book name that has been inputted in the book name input/display space is temporarily stored in the book name storage region of the variable storage region by the platform program, after which it is handed to the book search service program that is booted by the call-up program, as an input variable. The UI screen that is displayed at the display 44 of the client terminal 42 is switched to the book purchase screen in association with the conditional starting button marked "Search" being selected, and a book ID used as an output variable of the book search service is temporarily stored in the book ID storage region of the variable storage region by the call-up program, after which it is displayed in the book ID input/display space in the book purchase screen by the platform program.

When the book purchase screen is displayed at the display 44, the user checks the book ID displayed in the book ID input/display space in this screen, inputs to overwrite the book ID as necessary, and inputs purchaser information in the purchaser information input/display space, and then selects the conditional starting button marked "Purchase" (a button for calling up the book purchase service). Accordingly, the purchase information inputted in the purchasing information input/display space is stored in the purchaser information storage region of the variable storage region by the platform program (if inputting to overwrite the book ID has been performed by the user, the overwritten inputted book ID is also stored in the corresponding storage region), after which the book ID and the purchaser information stored in the variable storage region are handed to the book purchase service program that is booted by the call-up program as input variables. The UI screen displayed at the display 44 of the client terminal 42 is switched to the result display screen in association with the conditional starting button marked "Purchase" being selected, and result information used as an output variable of the book purchase service is temporarily stored in the result information storage region of the variable storage region by the call-up program, after which it is displayed in the result information input/display space in the result display screen by the platform program.

Next, an operation when-from a state in which an arbitrary document is displayed at the display 44 of the client terminal 42, to which a link has been added in which link information including address information (a URL) of a link call-up UI screen is embedded-the link call-up UI screen is directly called up by the above-mentioned link being selected is described. Here, the above-mentioned arbitrary document may be a document to which links may be added and may be any of various types of document that are capable of being displayed by any of various applications: For example, text documents, spreadsheets, presentation documents, e-mail documents, web pages and the like.

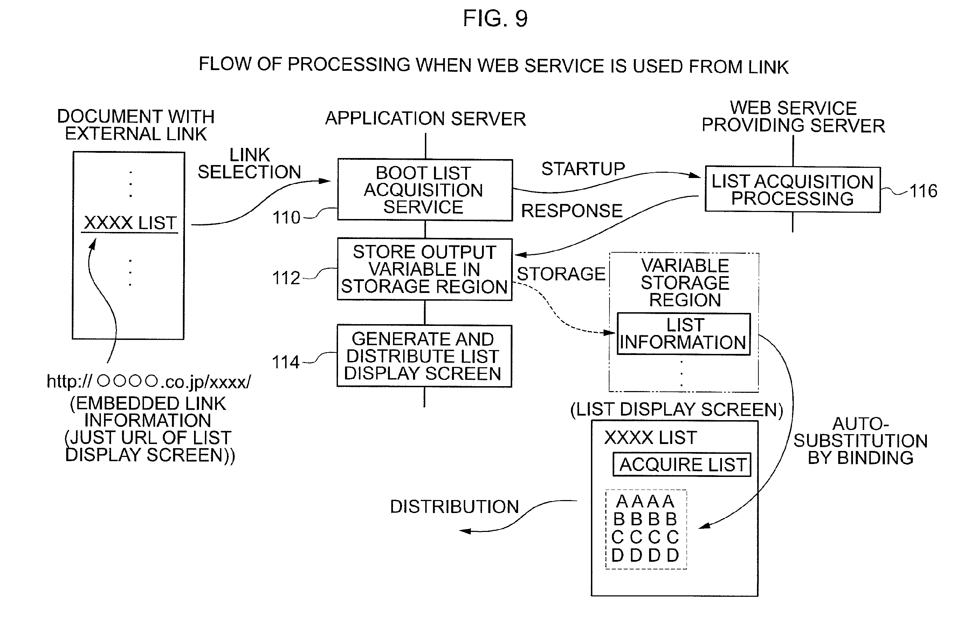

When a link call-up UI screen is directly called up by a link being selected, the platform program is booted on the application server 34. If the specific web service whose processing result is displayed in the called up link call-up UI screen is a web service that has no input variable (for example, a web service that acquires list information or the like), then, as shown in Fig. 9, link information that is embedded in the selected link is structured only by address information (a URL) of the link call-up UI screen, and no processing parameters are added. Thus, information of the link call-up UI screen that has been called up is read by the platform program, and processing that generates information for distribution of the link call-up UI screen is performed immediately.

Here, an unconditional starting button is provided in the link call-up UI screen that is called up. Thus, in the processing that generates the information for distribution of the link call-up UI screen, firstly, the call-up program that has been added to this unconditional starting button is executed unconditionally at the application server 34. Then, processing that boots the program of the corresponding web service on the web service providing server 36 is performed by this call-up program (step 110 in Fig. 9). The processing for realizing the corresponding web service is executed at the web service providing server 36 (step 116 in Fig. 9).

When the processing by the program that is booted on the web service providing server 36 (for example, list acquisition processing) ends, information corresponding to a processing result (an output variable) is handed from the web service providing server 36 to the application server 34, and processing that stores the data handed over in the storage region corresponding to the output variable in the variable storage region is performed by the call-up program (step 110 in Fig. 9; see the broken line arrow marked "storage" in Fig. 9). The storage region in which the data is newly stored by the above processing has been related with the link call-up UI screen by the second operation performed by the developer at the time of UI construction, and processing that displays the data newly stored in this storage region in the related information input/display space in the link call-up UI screen is performed by the platform program operating at the application server 34 (see the solid line arrow marked "auto-substitution by binding" in Fig. 9).

Then, the link call-up UI screen in which the result of processing by the web service is displayed is distributed to the client terminal 42 (step 114 in Fig. 9), and is displayed at the display 44 of the client terminal 42. Here, in the link call-up UI screen displayed at the 44 at this time, the unconditional starting button provided in the link call-up UI screen is non-visibly displayed (displayed as a transparent button) in accordance with the attribute information of the button that has been changed by the unconditional starting button generation processing (see the "Acquire list" button displayed faintly in Fig. 9).

Next, a case in which a specific web service whose processing result is displayed in a link call-up UI screen that is called up by a link being selected is a web service that has (an) input variable(s) is described (for example, a web service that performs book ordering processing that orders a book matching a book ID that is provided as an input variable, or the like).

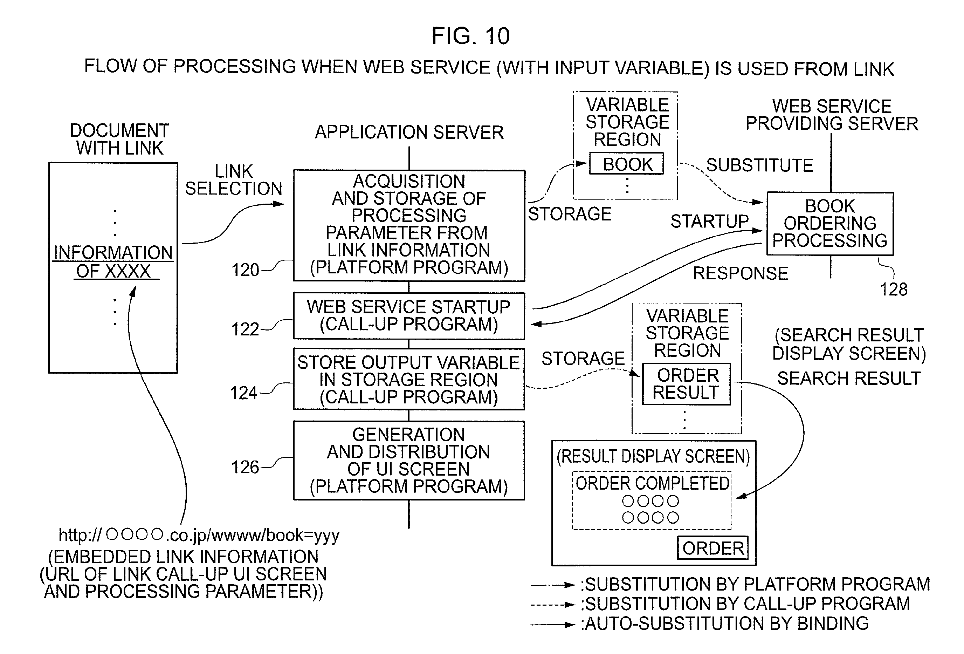

When a link call-up UI screen is directly called up by a link being selected, the platform program is booted on the application server 34 as described above and, if the specific web service whose processing result is to be displayed in the called up link call-up UI screen is a web service that has an input variable, the link information embedded in the selected link is structured with, for example, as shown in Fig. 10, a processing parameter added to the address information (URL) of the link call-up UI screen (in the example of "book=yyyy" shown in Fig. 10, the variable (processing parameter) name is "book" and the value of the variable is "yyyy"). If a processing parameter has been added to the link information embedded in the selected link, the booted platform program performs processing to acquire the processing parameter added to the link information (the variable name and the value of the variable), search for a corresponding storage region by searching the variable storage region with the acquired variable name as a key, and store the value of the variable that was previously stored in the storage region extracted by the search (see step 120 of Fig. 10).

Next, processing that reads out information of the called up link call-up UI screen (a result display image in the example of Fig. 10) and generates information for distribution of the link call-up UI screen is performed by the platform program. An unconditional starting button is provided in the called up link call-up UI screen. Thus, in the processing that generates the information for distribution of the link call-up UI screen, the call-up program that has been added to the unconditional starting button is executed unconditionally by the application server 34, the processing parameter is temporarily stored as the input variable (argument) in a corresponding storage region by means of the platform program, and processing that boots the program of the corresponding web service is performed at the web service providing server 36 by this call-up program (see step 122 in Fig. 10). Accordingly, the processing parameter temporarily stored in the corresponding storage region by the platform program is handed to the program of the web service that has been booted on the web service providing server 36 as the input variable (argument), and processing for realizing the corresponding web service is executed at the web service providing server 36 (see step 128 in Fig. 10) in accordance with the processing parameter handed over as the input variable (argument) (for example, in the example of Fig. 10, book ordering processing that orders a book matching the handed over value, using the book ID ("book") as the input variable).

When the processing by the program that has been booted on the web service providing server 36 (for example, the book ordering processing) ends, information corresponding to a processing result (an output variable) is handed from the web service providing server 36 to the application server 34, and processing that stores the handed over data in the storage region corresponding to the output variable in the variable storage region is performed at the application server 34 by the call-up program (step 124 in Fig. 10; see the broken line arrow marked "storage" in Fig. 10). The data that is newly stored in the storage region by the above processing is displayed in the information input/display space in the link call-up UI screen that is related with the storage region, by the platform program operating at the application server 34 (see the solid line arrow marked "auto-substitution by binding" in Fig. 10).

Then, the link call-up UI screen in which the result of processing by the web service is displayed is generated and distributed to the client terminal 42 (step 126 in Fig. 10), and the generated link call-up UI screen is displayed at the display 44 of the client terminal 42. Here, in the link call-up UI screen displayed at the display 44 at this time too, the unconditional starting button provided in the link call-up UI screen is non-visibly displayed (displayed as a transparent button) (see the "Order" button displayed faintly in Fig. 10). By the above-described processing, various web services are provided to users who call up link call-up UI screens by selecting links.

Herein, in the above descriptions a mode is described in which an unconditional starting button that is used as a starting button for booting a web service that has an input variable is provided in a link that is called up by a link being selected. However, the present invention is not to be limited thus. Instead of the above-described unconditional starting button, a conditional starting button (a starting symbol to which is added a program that performs the starting and variable exchange processing when the starting symbol provided in the UI screen is selected) may be provided. Herebelow, operation when a link call-up UI screen in which a conditional starting button is provided as a starting button for booting a web service that has an input variable is called up by a link being selected is described.

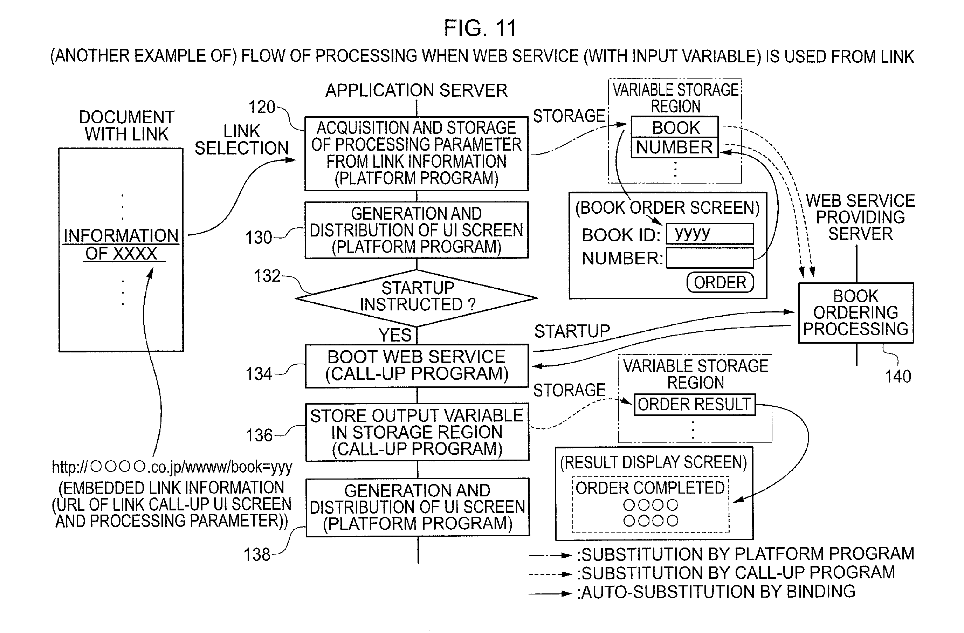

For example, as shown in Fig. 11, when a link call-up UI screen is directly called up by a link being selected, in which link information is embedded in which a processing parameter (for example, a book ID) is added to address information (the URL) of the link call-up UI screen, the platform program is booted on the application server 34 as described earlier, and the booted platform program performs processing that acquires the processing parameter added to the link information (a variable name and the value of a variable), searches for the corresponding storage region by searching the variable storage region using the acquired variable name as a key, and acquires a value of the variable that has been previously stored in the storage region extracted by the search (see step 120 in Fig. 11).

Next, processing that reads out information of the called up link call-up UI screen (a book order screen in the example of Fig. 11) and generates information for distribution of the link call-up UI screen is performed by the platform program. In the example shown in Fig. 11, a conditional starting button is provided in the called up link call-up UI screen (the button that is shown marked "Order" in Fig. 11). Thus, the call-up program that has been added to the conditional starting button is not executed at this stage but the information for distribution of the link call-up UI screen is generated and distributed to the client terminal 42 (step 130 in Fig. 11) and the link call-up UI screen is displayed at the display 44 of the client terminal 42, without the processing being interrupted by the corresponding web service program being booted.

In the example of Fig. 11, an order number amount information input/display space is provided in the book order screen that is used as a link call-up UI screen. When this is displayed at the display 44 and a user inputs an order number amount into the order number amount information input/display space of the book order screen, and then performs an operation to select the conditional starting button marked "Order" (the button for calling up the book order service) (when the determination of step 132 in Fig. 11 is positive), the order number amount inputted into the order number amount information input/display space is stored in an order number amount storage region of the variable storage region by the platform program. In association with the conditional starting button being selected, the call-up program added to the conditional starting button is executed by the application server 34. Processing is performed by this call-up program (see step 134 in Fig. 11) that boots the program of the corresponding web service on the web service providing server 36 using processing parameters that have been temporarily stored in corresponding storage regions by the platform program as input variables (arguments) (a processing parameter added to the address information of the link call-up UI screen (for example, a book ID) and the order number amount inputted by the user).

Accordingly, the processing parameters temporarily stored in the corresponding storage regions by means of the platform program are handed to the program of the web service that has been booted on the web service providing server 36 as the input variable (argument), and processing for realizing the corresponding web service is executed at the web service providing server 36 (see step 140 in Fig. 11) in accordance with the processing parameters handed over as the input variables (arguments) (for example, in the example of Fig. 11, book ordering processing that orders books matching the handed over value, using the book ID ("book") as the input variable, in the same number as the order number amount).

When the processing by the program that has been booted on the web service providing server 36 (for example, the book ordering processing) ends, information corresponding to a processing result (an output variable) is handed from the web service providing server 36 to the application server 34, and processing that stores the handed over data in the storage region corresponding to the output variable in the variable storage region is performed at the application server 34 by the call-up program (step 136 in Fig. 11; see the broken line arrow marked "storage" in Fig. 11). Information for distribution of a UI screen that displays the result of processing by the web service (for example, the result display screen shown in Fig. 11) is generated by the platform program, and the data that has been stored in the storage region by the call-up program (the output variable) is displayed in an information input/display space in the UI screen (see the solid line arrow marked "auto-substitution by binding" in Fig. 11). Then, the generated UI screen is distributed to the client terminal 42 by the platform program (see step 138 in Fig. 11), and is displayed at the display 44 of the client terminal 42.

Further, in the above descriptions a mode is described in which a screen control program corresponding to the first program relating to the present invention and a web service providing program corresponding to the second program relating to the present invention are executed at different computers (the application server 34 and the web service providing server 36). However, this is not to be limiting. The first program and the second program may be executed at the same computer.

Further again, in the above descriptions a mode is described in which, after a conditional starting button is temporarily generated, an unconditional starting button that boots the same web service unconditionally (when a link call-up UI screen is called up) is generated by a change of information of the conditional starting button, in which an operation is performed that turns on a SubmitOnLoad function of the generated conditional starting button. However, this is not to be limiting. The generation of unconditional starting buttons may be performed separately from the generation of conditional starting buttons.

Further yet, in the above descriptions a mode is described that provides a predetermined web service to a user accessing a web site (the application server 34) through the Internet 40. However, this is not to be limiting. A mode is also applicable that uses an intranet instead of the Internet 40 and provides a predetermined web service to a user capable of connecting to this intranet (for example, an employee of a specific corporation), or the like.

Further still, in the above descriptions a mode has been described in which the conditional starting button generation program and the unconditional starting button generation program corresponding to the application development support program relating to the present invention are memorized in advance (installed) at the memory section 16C of the client terminal 16, and similarly the platform program corresponding to the application development support program is memorized in advance (installed) at the memory section 34C of the application server 34. However, the application development support program relating to the present invention may be provided in a mode of being stored at a storage medium such as a CD-ROM, a DVD-ROM or the like. The storage medium of this mode corresponds to the storage medium recited in claim 10.

### EXPLANATION OF REFERENCE NUMERALS

- 10: Computer system
- 12: Server computer
- 16: Client terminal
- 30: Computer system
- 34: Application server
- 36: Web service providing server
- 42: Client terminal

## Claims

1. An application development support device that supports development of an application program including a first program and a second program, which is performed using
a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and
a second tool that, when a flowchart that defines processing that provides a desired web service is created by a developer, generates the second program for executing the processing that the created flowchart represents,
the application development support device comprising:
variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided;
symbol generation component that, before the first operation is performed on the first tool, generates a starting symbol for causing processing to be performed that calls up the second program and provides the predetermined web service, as a symbol that is usable as a structural element of the user interface screen;
program addition component that
generates a third program that performs starting and variable exchange processing which, when, at a time of operation,
the user interface screen in which the starting symbol generated by the symbol generation component is provided is called up or
the starting symbol provided in the user interface screen is selected, causes the second program to be booted and, using data stored in a storage region in the variable storage region of a variable that corresponds to an input variable of the processing corresponding to the starting symbol as an argument, causes the corresponding processing to be executed, and
adds the generated third program to the starting symbol; and
storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.

2. The application development support device recited in claim 1, wherein the program addition component
generates, as the third program, a program that performs the starting and variable exchange processing when the starting symbol provided in the user interface screen is selected and adds the program to the starting symbol,
and, if conversion of the starting symbol for unconditional starting is instructed, changes the third program added to the starting symbol to a program that performs the starting and variable exchange processing unconditionally when the user interface screen in which the starting symbol is provided is called up.

3. The application development support device recited in claim 2, wherein the symbol generation component performs a change setting of attribute information on the starting symbol for which conversion for unconditional starting has been instructed, such that the starting symbol is non-visibly displayed on the user interface screen in which the starting symbol is provided at a time of operation.

4. The application development support device recited in claim 1, wherein
the first tool is a tool that generates the first program for realizing the user interface when the construction target user interface is defined by a second operation and a third operation being performed by a developer in addition to the first operation, the second operation relating each individual information input/display space provided in the user interface screen designed by the first operation with a storage region of a corresponding variable among the plurality of variables for which the storage regions are provided in the variable storage region, and the third operation defining transitions of a plurality of user interface screens that are designed,
the variable storage region generation component, on the basis of variable definition information that respectively define input variables and output variables of m types of processing that are executable by n types of the second program generated using the second tool (m≥n), generates, as the variable storage region, a variable storage region in which storage regions of the variables defined by the variable definition information are respectively provided and storage regions of variables that are duplicatively defined by the variable definition information are shared,
the symbol generation component generates, as the starting symbol, each of m types of starting symbol for calling up any of the n types of second program and causing mutually different processing among the m types of processing to be performed, and,
for each of the m types of starting symbol, the program addition component
generates, as the third program, a program that performs starting and variable exchange processing which, when, at a time of operation, the user interface screen in which a specific starting symbol generated by the symbol generation component is provided is called up or the specific starting symbol provided in the user interface screen is selected,
in addition to processing that causes, among the n types of second program, a specific second program for which the corresponding processing is executable to be booted and, using data stored in a storage region, among the storage regions in the variable storage region, of a variable that corresponds to an input variable of the processing corresponding to the specific starting symbol as an argument, causes the corresponding processing to be executed,
stores an output variable handed from the specific second program when execution of the corresponding processing by the specific second program ends in a storage region, among the storage regions in the variable storage region, of a variable corresponding to the handed over output variable, and
adds the generated third program to the specific starting symbol.

5. The application development support device recited in claim 1, wherein
the first program is executed on a computer that executes a platform program that functions as a platform for executing the first program and,
at a time of execution of the first program by this computer, synchronized processing is performed by the platform program that,
when information is newly inputted in a specific information input/display space that is provided in the user interface screen displayed at a display screen and at which input of information is possible, stores the inputted information in a specific storage region, among the storage regions in the variable storage region, that is related with the specific information input/display space and,
when the information is newly stored in the specific storage region in the variable storage region, causes the stored information to be displayed in a specific information input/display space that is provided in a user interface screen displayed in the display screen, is related with the specific storage region and at which display of the information is possible.

6. The application development support device recited in claim 1, wherein the first program is executed on a computer that executes a platform program that functions as a platform for executing the first program, and the storage component is realized by the platform program.

7. The application development support device recited in claim 1, wherein the first tool is a tool that conforms to a first standard, and the second tool is a tool that conforms to a second standard and generates the second program for executing the processing that the created flowchart represents when the flowchart that defines the processing that provides the desired web service is created by a developer.

8. The application development support device recited in claim 7, wherein the first standard is JSF and the second standard is BPEL.

9. An application development support program for causing a computer to function as an application development support device that supports development of an application program including a first program and a second program, which is performed using
a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and
a second tool that, when a flowchart that defines processing that provides a desired web service is created by a developer, generates the second program for executing the processing that the created flowchart represents,
wherein the application development support program causes a first computer at which at least the first tool operates to function as:
variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided;
symbol generation component that, before the first operation is performed on the first tool, generates a starting symbol for causing processing to be performed that calls up the
second program and provides the predetermined web service, as a symbol that is usable as a structural element of the user interface screen; and
program addition component that
generates a third program that performs starting and variable exchange processing which, when, at a time of operation,
the user interface screen in which the starting symbol generated by the symbol generation component is provided is called up or
the starting symbol provided in the user interface screen is selected,
causes the second program to be booted and, using data stored in a storage region in the variable storage region of a variable that corresponds to an input variable of the processing corresponding to the starting symbol as an argument, causes the corresponding processing to be executed, and
adds the generated third program to the starting symbol,
and causes a second computer that executes at least the first program to function as:
storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.

10. A storage medium storing an application development support program for causing a computer to function as an application development support device that supports development of an application program including a first program and a second program, which is
performed using
a first tool that, when a plurality of types of symbol that are usable as structural elements of a user interface screen are displayed at a display screen and a construction target user interface is defined by at least a first operation that designs the user interface being performed by a developer providing a desired symbol among the plurality of types of symbol to a desired position in a screen, generates the first program for realizing the user interface and
a second tool that, when a flowchart that defines processing that provides a desired web service is created by a developer, generates the second program for executing the processing that the created flowchart represents,
wherein the application development support program causes a first computer at which at least the first tool operates to function as:
variable storage region generation component that, before the first operation is performed on the first tool, generates a variable storage region in which, on the basis of variable definition information that respectively defines an input variable and an output variable of processing that is executable by the second program generated using the second tool, storage regions of the variables defined by the variable definition information are respectively provided;
symbol generation component that, before the first operation is performed on the first tool, generates a starting symbol for causing processing to be performed that calls up the second program and provides the predetermined web service, as a symbol that is usable as a structural element of the user interface screen; and
program addition component that
generates a third program that performs starting and variable exchange processing which, when, at a time of operation,
the user interface screen in which the starting symbol generated by the symbol generation component is provided is called up or
the starting symbol provided in the user interface screen is selected, causes the second program to be booted and, using data stored in a storage region in the variable storage region of a variable that corresponds to an input variable of the processing corresponding to the starting symbol as an argument, causes the corresponding processing to be executed, and
adds the generated third program to the starting symbol,
and causes a second computer that executes at least the first program to function as:
storage component that, when a specific user interface screen is directly called up from a link, in which link information including address information of the specific user interface screen and a processing parameter is embedded, by the link being selected at a time of operation, acquires the processing parameter embedded in the link and causes the acquired processing parameter to be stored in a corresponding storage region in the variable storage region.
